# EUROPÄISCHE PATENTSCHRIFT

(11) **EP 2 617 511 B1**
(45) Veröffentlichungstag und Bekanntmachung des Hinweises auf die Patenterteilung: **25.11.2015**
(21) Anmeldenummer: 13151647.8
(22) Anmeldetag: 17.01.2013
(51) Int. Cl.: B23K 11/30

(54) **Kappenabzieher zum automatischen Lösen und Entfernen der Punktschweißkappe von der Schweißelektrode einer Punktschweißzange**
Cap remover for automatically loosening and removing the spot welding cap of the welding electrode of a spot welding gun
Dispositif d'extraction d'embout destiné à détacher et retirer automatiquement l'embout d'une électrode de soudage d'une pince de soudage par points

(30) Priorität: 19.01.2012 DE 202012000498 U
(43) Veröffentlichungstag der Anmeldung: 24.07.2013
(73) Patentinhaber: AEG SVS Schweisstechnik GmbH, 45475 Mülheim/Ruhr (DE)
(72) Erfinder: Bäker, Reinhard, 52441 Linnich (DE)
(74) Vertreter: Bauer, Wulf

(56) Entgegenhaltungen:
- DE-B3-102005 035 915
- DE-U1-202008 017 801
- JP-A- 2010 089 115

## Beschreibung

Die vorliegende Erfindung betrifft eine Vorrichtung und ein Verfahren zum automatischen Lösen und Entfernen einer Punktschweißkappe von der Elektrode einer Punktschweißzange oder Punktschweißvorrichtung.

Bei Punktschweißzangen und -vorrichtungen müssen die verschlissenen Schweißkappen in regelmäßigen Abständen ausgewechselt werden. Die Schweißkappen werden i. d. R. über einen selbsthaltenden Konussitz auf die Elektrode aufgesetzt. Hier verbleibt zwischen Kappe und Elektrode stirnseitig ein Spalt von etwa 2 mm. Im Folgenden finden die Begriffe "Kappe" und "Schweißkappe" synonym verwendet. Durch Aufbringen eines vorbestimmten Anpressdruckes erhalten die Kappen einen festen, wasserdichten Sitz. Je nach Bauart wird ein Teil der Schweißelektroden und -kappen von einem Kühlmedium durchflossen, wobei der Konussitz der Schweißkappe den Kühlkreislauf nach außen hin abdichtet. Zusätzlich sorgen die im Schweißvorgang auftretenden Zangenkräfte, sowie das oft schlagförmige Aufsetzen der Elektrode auf das zu schweißende Blechmaterial, für einen festeren Sitz der Kappe auf der Elektrode. Entsprechend hoch sind die aufzubringenden Kräfte, um die Kappe wieder zu lösen.

Nach heutigem Stand der Technik werden die Kappen in eine manuelle oder automatische Klemmvorrichtung eingespannt und in einer drehend-ziehenden Bewegung von der Elektrode entfernt. Eine zweite Methode ist es, in den Spalt zwischen Kappe und Elektrode einen gabelförmigen Keil zu treiben, der die Kappe von der Elektrode löst.

Die drehend-ziehende Methode hat den Nachteil, dass der Konussitz bei einer rotierenden Relativbewegung zwischen Kappe und Elektrode Schaden nimmt und undicht wird. Darüber hinaus ist die Elektrode am anderen Ende oftmals mit einer Gewindeverbindung in den Elektrodenarm eingeschraubt. Bei einer drehenden Bewegung der Kappe in Losrichtung des Gewindes besteht die Gefahr, dass sich nicht die Kappe löst, sondern das Gewinde der Elektrode. Ein weiterer Nachteil der Drehen-Ziehen-Methode ist, dass entweder die Kappenwechselvorrichtung oder die mobile Schweißzange einen raumgreifenden Schwenk von bis zu 180° durchführen muss.

Das Eintreiben eines Keiles in den Spalt zwischen Kappe und Elektrode hat den Nachteil, dass bei manueller Betätigung unerwünschte Biegekräfte auf die Elektrode aufgebracht und mehrfach nachgehebelt werden muss. Hier entstehen nicht selten Beschädigungen an der Elektrode. Eine automatische Vorgehensweise erfordert eine aufwendige Vorrichtung mit Gegenhalterfunktion, um Biegekräfte auf die Elektrode zu vermeiden.

Beiden Methoden ist gemeinsam, dass für den Ablösevorgang der Kappe von der Elektrode lange Zeiträume benötigt werden.

Aus DE 10 2005 035 915 B3 ist ein Punktschweißkappenwechsler mit einem Kappenabzieher, der Backen aufweist, bekannt. Der Kappenabzieher ist jeweils endseitig an den Backen offen und damit für die Kappe zugänglich. Die Backen greifen die Kappe, halten sie fest und lösen sie bei einer Drehung um einen gewissen Winkel. Aus der DE 10 2010 061 546 B4 ist ein Kappenabzieher bekannt, bei dem wenigstens zwei Ringsegmentscheiben in den Spalt zwischen Kappe und Schaft der Schweißelektrode greifen und die Kappe abziehen. Aus DE 20 2008 017 801 U1 ist eine Vorrichtung zum Lösen und Entfernen einer Schweißkappe bekannt, bei dem die Kappe sowohl gedreht als auch gezogen wird, sodass die insgesamt mit einer schraubenlinienförmigen Bewegung abgezogen wird. Aus DE 20 2009 017 079 U1 ist eine Vorrichtung zum Lösen und Entfernen von Kappen bekannt, bei der ein Abziehwerkzeug die Kappe in Gegenrichtung zur Löserichtung des in die Schweißzange eingeschraubten Elektrodenschaftes dreht und gleichzeitig zieht.

Aus der bereits genannten DE 10 2010 061 546 B4 ist in Figur 1 eine Elektrode einer Punktschweißzange mit einer Kappe 12 ersichtlich, es ist ein Spalt 14 zu erkennen.

Die Aufgabe der vorliegenden Erfindung ist es nun, in einem einfachen, schnellen und schonenden Arbeitsgang die Kappe von der Elektrode zu trennen. Diese Aufgabe wird gelöst durch eine Vorrichtung mit den Merkmalen des Anspruchs 1 und ein Verfahren mit den Merkmalen des Anspruchs 5.

Die Erfindung beruht auf der Idee, den Spalt zwischen Kappe und Elektrode in einen Halter einzuführen, die Kappe zwischen zwei rotierenden Mitnehmern einzuklemmen und so die Kappe mittels einer in Richtung des Axialverlaufs der Elektroden wirkenden Kraft von der Elektrode - je nach Betrachtung ziehend oder drückend - zu lösen. Das Abziehen der Kappe erfolgt rein translatorisch ohne Drehung. Von den beiden rotierenden Mitnehmern ist mindestens einer motorisch drehangetrieben, vorzugsweise sind beide motorisch angetrieben. Die Mitnehmer rotieren um Drehachsen, die in einer Radialebene zur Längsrichtung der Schweißelektrode liegen. Die Drehachsen liegen bevorzugt in derselben Radialebene. Diese Radialebene schneidet die abzuziehende Kappe zwischen einer unteren Abrundung der Kappe und dem Spalt, vorzugsweise näher an der unteren Abrundung als dem Spalt.

Vorzugsweise sind die beiden Mitnehmer baugleich und/oder weisen eine Symmetrie auf. Vorzugsweise kommen die beiden Mitnehmer bei Beginn der Abziehbewegung gleichzeitig mit der Kappe in Kontakt. Die Mitnehmer sind vorzugsweise mit einem Außenprofil versehen. Das Außenprofil kommt in Kontakt mit der Kappe und greift in die Oberfläche der Kappe ein. Der Gegenhalter kann, muss aber nicht mit dem Spalt zusammenwirken, die Schweißelektrode kann auch außerhalb des Spaltes gehalten werden. Vorteilhaft ist es, den Spalt für die Positionierung der Schweißelektrode im Halter zu verwenden.

Eine Weiterentwicklung zeigt eine vorzugsweise exzentrische Lagerung der Mitnehmer, um während des Abziehens den Druck der Mitnehmer auf die abzuziehende Kappe zu erhöhen.

Eine Verbesserung zeigt eine Profilierung der Oberfläche der Mitnehmer, um die Haltekräfte an den Kappen zu erhöhen.

Beispielsweise ist die Profilierung und/oder das Material wenigstens eines Mitnehmers, bevorzugt beider Mitnehmer so gewählt, dass durch plastische Verformung der Oberfläche der Kappe, die Kraftübertragung zwischen Mitnehmer und Kappe erhöht werden. Beispielsweise ist wenigstens der in Berührkontakt mit der Kappe kommende Bereich des Mitnehmers, bevorzugt der gesamte Mitnehmer aus einem Werkstoff gefertigt, der härter ist als das Material der Kappe, beispielswiese ist der Mitnehmer aus Werkzeugstahl und die Kappe aus Messing hergestellt.

Die Profilierung wenigstens eines Mitnehmers, besonders bevorzugt beider Mitnehmer, weist gemäß einer bevorzugten Ausgestaltung eine Schneide auf. Die Schneide ist jeweils so ausgebildet, dass mit der Drehung des Mitnehmers die Schneide in spanabhebendem Eingriff mit der Oberfläche der Schweißkappe gelangt. Beispielsweise gelangt die Schneide wie ein Meißel in das Material der Kappe ein, hebt einen Span ab und der der daraus resultierende zunehmende Widerstand sorgt dafür, dass die Kappe letztlich mitgenommen wird.

Eine Verbesserung beschreibt die Erweiterung oder den Ersatz des Halters durch einen Gegenhalter der Elektrode außerhalb des Spaltes zwischen Kappe und Elektrode.

Die Erfindung betrifft ferner ein Verfahren zum automatischen Lösen und Entfernen einer Schweißkappe einer Schweißelektrode von dieser Schweißelektrode. Das Verfahren zeichnet sich dadurch aus, dass die Schweißelektrode mit aufgesetzter Schweißkappe in eine Abziehvorrichtung eingebracht wird, wobei die Abziehvorrichtung ein Paar gegenläufiger Mitnehmer aufweist, die jeweils ein Außenprofil aufweisen, dass in einer Ausgangsstellung die beiden Außenprofile einen größeren Abstand voneinander aufweisen als die Abmessung der Schweißkappe der Schweißelektrode beträgt, dass die Schweißelektrode zwischen die beiden Mitnehmer eingebracht wird, dass die Mitnehmer in Rotation und in Anlage an die Schweißkappe gebracht werden, wobei sie eine Kraft in Axialrichtung der Schweißelektrode erzeugen und die Schweißkappe von ihrer Schweißelektrode gelöst und entfernt wird.

Es versteht sich, dass die vorstehenden Merkmale und die nachstehend noch zu erwähnenden Merkmale nicht nur in der angegebenen Kombination, sondern auch in anderen Kombination und Alleinstellungen verwendbar sind, ohne den Rahmen der vorliegenden Erfindung zu verlassen.

Bevorzugte Ausführungsbeispiele sind in der Zeichnung dargestellt und werden in der nachfolgenden Beschreibung näher erläutert.

### Ausführungsbeispiele:

In den Fig. 1 bis Fig. 6 sind Funktion und Ausgestaltung dargestellt.
Fig. 1 zeigt eine perspektivische Darstellung einer Schweißelektrode, die eine abzuziehende Kappe aufweist, sowie eines Kappenabziehers, in den die Schweißelektrode eingebracht ist, gezeigt ist eine mögliche Ausgestaltung des Kappenabziehers in isometrischer Darstellung. Dargestellt ist der Kappenabzieher, beispielhaft aufmontiert auf ein Kegelradgetriebe als Antriebseinheit.
Fig. 2 zeigt ein Detail von Fig. 1 in einer Seitenansicht, dargestellt ist das Mitnehmerpaar in Ruhestellung.
Fig. 3 zeigt eine Seitenansicht wie Fig. 2, dargestellt ist das Mitnehmerpaar im Moment der Berührung mit der Elektrodenkappe.
Fig. 4 zeigt eine Seitenansicht wie Fig. 2, dargestellt ist das Mitnehmerpaar nach Lösen der Elektrodenkappe.
Fig. 5 zeigt ein zweites Ausführungsbeispiel, gezeigt ist eine Seitenansicht ähnlich Fig. 2, das Mitnehmerpaar ist nun mit Vollprofil ausgestattet und mit exzentrischer Lagerung versehen, dargestellt sind die Mitnehmer in Ruhestellung.
Fig. 6 zeigt die Seitenansicht der Fig. 5, jedoch sind die Mitnehmer nun in Eingriffsstellung dargestellt.

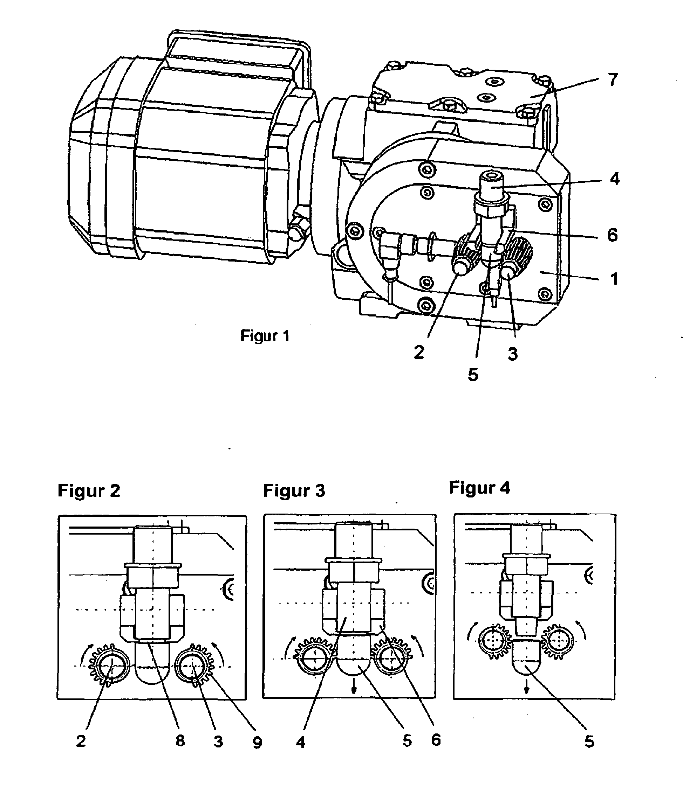

Das erste Ausführungsbeispiel nach den Figuren 1 bis 4 zeigt (siehe insbesondere Figur 1) einen Elektromotor, der über einen Antrieb 7 mit Kegelradgetriebe mit einem Getriebe 1 verbunden ist. Von diesem ragen ein erster Mitnehmer 2 und ein zweiter Mitnehmer 3, die baugleich sind, nach vorn hervor. Die beiden Mitnehmer 2, 3 sind um Drehachsen drehbar, die parallel zueinander verlaufen und in einer Achsenebene liegen. Die Achsenebene ist eine Radialebene zur Längsrichtung der Schweißelektrode 4.

Vom Getriebe 1 springt weiterhin ein Gegenhalter 6 vor. Er ist wie eine Gabel mit zwei Zinken ausgeführt. Die Zinken sind stufig ausgeführt. Die beiden Zinken haben jeweils einen inneren Vorsprung. Die Vorsprünge weisen aufeinander zu. Die Vorsprünge greifen in einen Spalt 8 zwischen einer Schweißelektrode 4 und ihrer Schweißkappe 5.

Die beiden Mitnehmer 2, 3 sind um raumfeste Drehachsen drehbar. Jeder Mitnehmer hat ein Außenprofil 9. Es wird im ersten Ausführungsbeispiel gebildet durch eine Verzahnung, die sich über etwa 180° des Umfanges (Halbprofil) erstreckt. Die Achsenebene der Drehachsen der beiden Mitnehmer 2, 3 verläuft rechtwinklig zu einer Längsachse der Schweißelektrode 4. Die Achsenebene der beiden Drehachsen schneidet die Schweißelektrode 4 in Nähe des Übergangs einer unteren Abrundung der Kappe 5 und eines zylindrischen Teils der Kappe. Oberhalb des zylindrischen Teils der Kappe 5 befindet sich der Spalt 8.

Figur 2 zeigt die Ausgangsstellung. Das Außenprofil 9 der beiden Mitnehmer 2,3 befindet sich nicht zwischen diesen beiden Mitnehmern 2, 3, sondern außerhalb des Zwischenraums zwischen den beiden Mitnehmern 2, 3. Dadurch ist zwischen den beiden Mitnehmern 2, 3 ausreichend freier Platz für die Kappe 5.

Die Schweißelektrode 4 ist im Gegenhalter 6 positioniert. Die Schweißelektrode 4 wird in den Gegenhalter dadurch eingeführt, dass sie in Richtung der Drehachsen der beiden Mitnehmer 2, 3 bewegt wird. Alternativ kann die in Figur 1 gezeigte Vorrichtung in Richtung der Drehachsen der beiden Mitnehmer 2, 3 bewegt werden, um an eine Elektrode 4 einer Schweißzange herangeführt werden zu können.

Figur 3 zeigt den Beginn des Eingriffs der Außenprofile 9 der Mitnehmer 2, 3 mit der Kappe 5. Die Mitnehmer 2, 3 drehen sich im Gegensinn, wie durch die Pfeile angedeutet ist. Dadurch kommt ein in der Drehrichtung vorn liegender Anfang der Profilierung 9 in Erstkontakt mit der Kappe 5. Dieser Erstkontakt erfolgt für beide Mitnehmer 2, 3 zur gleichen Zeit. Dies ist in Figur 3 dargestellt.

Jede weitere Drehung der beiden Mitnehmer 2, 3 um ihre Drehachsen ausgehend von Figur 3 führt nun zu einer axialen Zugbewegung im Sinne des Pfeils nach unten, die Kappe 5 wird nach unten bewegt und von ihrem Konussitz (siehe Figur 4), den die Schweißelektrode 4 ausbildet, abgezogen.

Figur 4 zeigt den Zustand, bei dem die Kappe 5 bereits abgezogen ist. Die beiden Mitnehmer 2, 3 haben dabei lediglich eine Drehbewegung um etwa 90° gemacht.

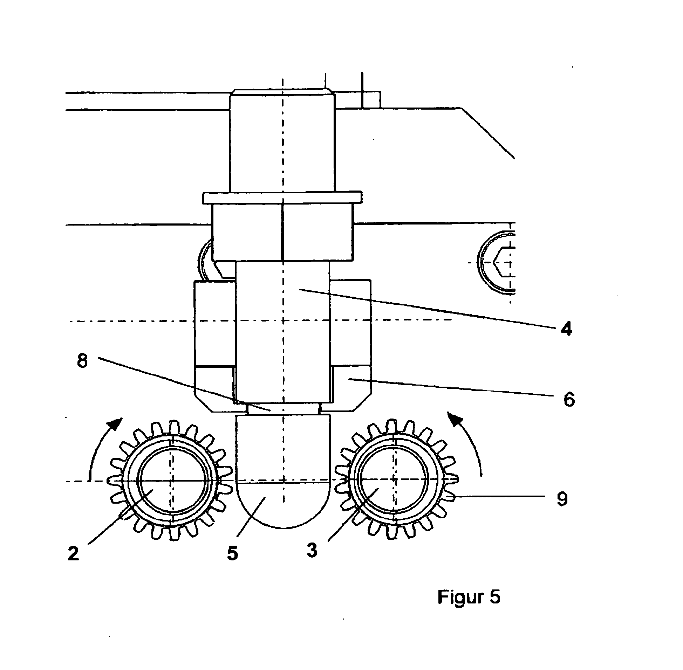

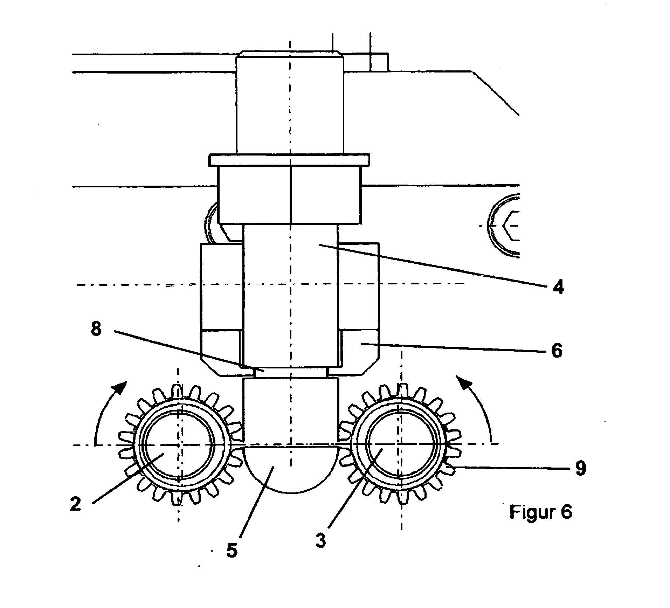

In dem zweiten Ausführungsbeispiel nach den Figuren 5 und 6 haben die Mitnehmer 2, 3 ein Außenprofil 9, das sich über 360° erstreckt (Vollprofil). Anders ausgedrückt sind sie als normale, radial verzahnte Räder ausgeführt. Sie sind exzentrisch gelagert. Die Exzentrizität ist in den Figuren 5 und 6 durch zwei parallele Linien angedeutet. Die Exzentrizität ist so gewählt, dass der in Figur 5 gezeigten Position ausreichend Platz für die Kappe 5 bleibt, um diese in dem Zwischenraum zwischen den beiden Mitnehmern 2, 3 anordnen zu können, ohne dass die Mitnehmer 2, 3 mit der Kappe 5 in Kontakt kommen, andererseits aber die Position gemäß Figur 6 erreicht wird, bei der beide Mitnehmer 2, 3 in ausreichendem Kontakt mit der Kappe 5 sind. In der Darstellung nach Figur 5 haben die beiden Mitnehmer 2, 3 den größten Abstand ihrer Außenprofile 9 voneinander. Dies ist die Ausgangsstellung. Werden die beiden Mitnehmer 2, 3 hiervon ausgehend drehangetrieben, kommen die Außenprofile 9 aufgrund der Exzentrizität einander zunehmend näher. Es wird nicht ein abrupt einsetzender Eingriff wie im ersten Ausführungsbeispiel, sondern ein zunehmend immer stärker werdender Eingriff der Außenprofile 9 in die Kappe 5 erreicht. Im Zustand nach Figur 6 haben die beiden Außenprofile 9 ihre kürzeste Entfernung voneinander. In diesem Zustand muss spätestens das Abziehen der Kappe 5 eingesetzt haben. Jede weitere Drehbewegung der Mitnehmer 2, 3 führt nämlich dazu, dass sich die Außenprofile wieder voneinander entfernen.

Bei dem Verfahren zum automatischen Lösen und Entfernen einer Kappe 5 einer Schweißelektrode 4 von dieser Schweißelektrode wird die Schweißelektrode mit aufgesetzter Schweißkappe in eine Abziehvorrichtung eingebracht, wobei die Abziehvorrichtung ein Paar gegenläufiger Mitnehmer 3, 4 aufweist, die jeweils ein Außenprofil 9 aufweisen, dass in einer Ausgangsstellung die beiden Außenprofile 9 einen größeren Abstand voneinander aufweisen als die Abmessung der Kappe 5 der Schweißelektrode beträgt, sodass die Schweißelektrode zwischen die beiden Mitnehmer 2, 3 eingebracht werden kann, dass die Mitnehmer in Rotation und in Anlage an die Kappe gebracht werden, wobei sie eine Schub- oder Zugkraft in Axialrichtung der Schweißelektrode erzeugen und die Schweißkappe 5 von ihrer Schweißelektrode lösen und entfernen. Die Erfindung bezieht sich weiterhin auf eine Abziehvorrichtung zum automatischen Lösen und Entfernen einer Schweißkappe 5 von einer Schweißelektrode 4, die Abzugsvorrichtung weist zwei gegenläufige Mitnehmer 3, 4 auf, die um parallele Drehachsen rotieren und die eine Profilierung 9 aufweisen, wobei in einer Ausgangsstellung der lichte Abstand der Außenprofile 9 voneinander größer ist als die Breite der Schweißkappe 5 und in einer Arbeitsposition der Abzugsvorrichtung die Außenprofile 9 beider Mitnehmer 2, 3 in Anlage an der Kappe 5 sind, mindestens ein Mitnehmer 2, 3 ist mit einem Drehantrieb verbunden. In einer Verbesserung weist die Abziehvorrichtung einen Gegenhalter 6 auf, der gabelförmig ausgebildet ist und für einen Eingriff in einen Spalt 8 zwischen der Kappe 5 und der restlichen Schweißelektrode 4 ausgelegt ist.

In einer Verbesserung verlaufen die Drehachsen der Mitnehmer 3, 4 in einer Achsenebene, die eine Radialebene zur Längsrichtung der Schweißelektrode 4 ist. In einer Weiterbildung des Verfahrens nähern sich die Außenprofile 9 der beiden Mitnehmer 2, 3 während des Verfahrensablaufs ausgehend von der Ausgangsstellung bis zur Abzugsstellung.

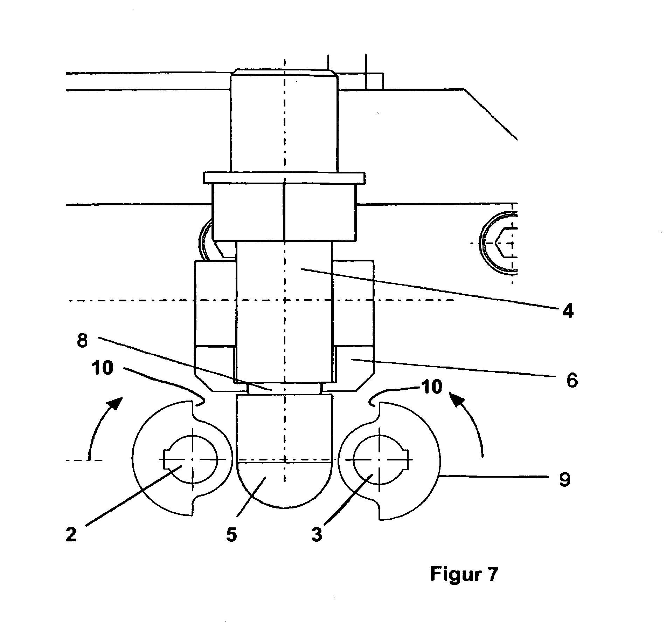

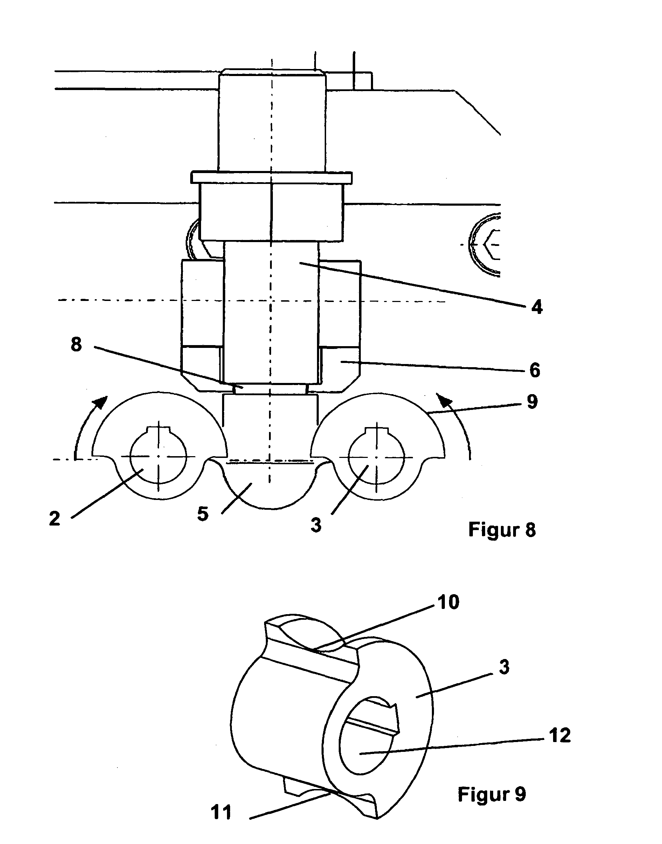

Die Figuren 7 und 8 zeigen eine weitere Ausgestaltung der erfindungsgemäßen Vorrichtung. Die hierin gezeigte Ausgestaltung unterscheidet sich von den zuvor beschriebenen Ausführungsformen im Wesentlichen durch die Ausgestaltung der gegenläufigen Mitnehmer 2 und 3. Diese weisen jeweils wenigstens eine Schneide 10 auf, die bei der Drehung der Mitnehmer 2, 3 in spanabhebendem Eingriff mit der Oberfläche der Kappe 5 gelangt. Die Schneide 10 gräbt sich in die Oberfläche der Kappe 5 ab, hebt einen Span ab und mit zunehmendem Materialabtrag wird die Kraftübertragung von Mitnehmer 2, 3 auf die Kappe 5 verbessert, wie es in Figur 8 gezeigt ist. Der erfindungsgemäße Mitnehmer 3 ist in perspektivischer Ansicht in Figur 9 gezeigt. Der Mitnehmer 3 weist eine buchsenförmige Aufnahme 12 für eine Antriebswelle auf. Zur Kraftübertragung zwischen der Antriebswelle und dem Mitnehmer 3 ist eine Nut 13 in der Wellenaufnahme 12 vorgesehen, die eine antriebswellenseitige Passfeder aufnimmt. Der Außenumfang des Mitnehmers 3 weist einen, in Figur 8 hinteren, radial vorstehenden Abschnitt auf, der für den Eingriff mit der Kappe vorgesehen ist. Der verbleibende, radial zurückgesetzte und in der Figur 9 vorne liegende Abschnitt ist nicht für den Eingriff mit der Kappe vorgesehen. An der jeweiligen, je nach Drehrichtung des Mitnehmers 3, Einlaufkante des vorstehenden Abschnitts ist eine Schneide 10 beziehungsweise 11 vorgesehen.

Die Vorrichtung zum automatischen Lösen und Entfernen der Schweißkappe von der Schweißelektrode einer Schweißzange hat einen Halter (6), in den eine Schweißelektrode mit aufgesetzter Schweißkappe eingebracht wird. Als Aufnahme dient der Spalt zwischen Kappe und Elektrode. Ein gegenläufiges Mitnehmerpaar erzeugt durch geeignete Profilierung eine Klemmung der Kappe. Durch Rotation der Mitnehmer wird eine Zugkraft in Achsrichtung der Elektrode erzeugt. Die Kappe wird von der Elektrode gelöst und entfernt.

### Bezugszeichenliste

| | | | |
|---|---|---|---|
| 1 | Getriebe | 8 | Spalt zwischen Elektrode und Kappe |
| 2 | Mitnehmer 1 | 9 | Außenprofil des Mitnehmers |
| 3 | Mitnehmer 2 | 10 | Schneide |
| 4 | Schweißelektrode | 11 | Ersatzschneide |
| 5 | Kappe, Schweißkappe | 12 | Wellenaufnahme |
| 6 | Gegenhalter | | |
| 7 | Antrieb (Kegelradgetriebe) | | |

## Patentansprüche

1. Vorrichtung zum automatischen Lösen und Entfernen der Schweißkappe (5) von der Schweißelektrode (4) einer Schweißzange oder Schweißvorrichtung, **gekennzeichnet durch** einen Halter (6), in den eine Schweißelektrode (4) mit aufgesetzter Schweißkappe (5) eingebracht wird, wobei als Aufnahme der Spalt (8) zwischen Schweißkappe und Elektrode dient, und ein gegenläufiges Mitnehmerpaar (2, 3), das **durch** geeignete Profilierung (9) wenigstens eine Klemmung der Schweißkappe erzeugt, wobei **durch** Rotation der Mitnehmer eine Zugkraft in Achsrichtung der Elektrode derart erzeugt wird, dass sich die Schweißkappe von der Elektrode löst und entfernt wird.

2. Eine Vorrichtung nach Anspruch 1, **dadurch gekennzeichnet, dass** das Mitnehmerpaar derart exzentrisch gelagert ist, dass sich während der Rotation der Druck auf die Schweißkappe erhöht.

3. Eine Vorrichtung nach Anspruch 1, **dadurch gekennzeichnet, dass** die Mitnehmer mit einem Oberflächenprofil zur Erhöhung des Haltedrucks an der Schweißkappe ausgebildet sind.

4. Eine Vorrichtung nach Anspruch 1, **dadurch gekennzeichnet, dass** die Profilierung wenigstens eines Mitnehmers eine Schneide zum spanabhebenden Eingriff mit der Schweißkappe aufweist.

5. Eine Vorrichtung nach Anspruch 1, **dadurch gekennzeichnet, dass** zur Unterstützung oder zum Ersatz des Halters (6) weitere Bauteile angebracht sind, welche die Elektrode außerhalb des Spaltes (8) derart halten oder abstützen, dass das Mitnehmerpaar (2 + 3) die Schweißkappe erfolgreich entfernen kann.

6. Verfahren zum automatischen Lösen und Entfernen einer Schweißkappe (5) einer Schweißelektrode (4) von dieser Schweißelektrode, **dadurch gekennzeichnet, dass** die Schweißelektrode mit aufgesetzter Schweißkappe in eine Abziehvorrichtung eingebracht wird, wobei die Abziehvorrichtung ein Paar gegenläufiger Mitnehmer (2, 3) aufweist, die jeweils ein Außenprofil (9) aufweisen, dass in einer Ausgangsstellung die beiden Außenprofile (9) einen größeren Abstand voneinander aufweisen als die Abmessung der Schweißkappe (5) der Schweißelektrode beträgt, dass die Schweißelektrode zwischen die beiden Mitnehmer (2, 3) eingebracht wird, dass die Mitnehmer in Rotation und in Anlage an die Schweißkappe gebracht werden, wobei sie eine Kraft in Axialrichtung der Schweißelektrode erzeugen und die Schweißkappe (5) von ihrer Schweißelektrode gelöst und entfernt wird.

7. Verfahren nach Anspruch 6, **dadurch gekennzeichnet, dass** mindestens einer der beiden Mitnehmer (3, 4), vorzugsweise beide Mitnehmer (2, 3), zu einer Drehbewegung angetrieben wird.

8. Verfahren nach Anspruch 6 oder 7, **dadurch gekennzeichnet, dass** jeder der beiden Mitnehmer (2, 3) um eine Drehachse rotiert, und dass die beiden Drehachsen in einer Achsenebene liegen, die eine Radialebene zur Längsrichtung der Schweißelektrode (4) ist.

9. Verfahren nach einem der Ansprüche 6 bis 8, **dadurch gekennzeichnet, dass** sich die Außenprofile (9) der beiden Mitnehmer (2, 3) während des Verfahrensablaufs ausgehend von der Ausgangsstellung bis zur Abzugsstellung nähern.

10. Verfahren nach einem der Ansprüche 6 bis 9, **dadurch gekennzeichnet, dass** beiden Mitnehmer (2, 3) um weniger als 360 Grad oder um weniger als 180 Grad rotieren.

11. Verfahren nach einem der Ansprüche 6 bis 10, **dadurch gekennzeichnet, dass** jeder der beiden Mitnehmer (2, 3) um eine Drehachse rotiert und dass das Außenprofil (9) um eine Außenprofilachse rotiert, die um eine Exzentermaß gegenüber der Drehachse verschoben ist.

12. Verfahren nach einem der Ansprüche 6 bis 11, **dadurch gekennzeichnet, dass** das Außenprofil (9) Mittel zum Eingriff in die Oberfläche der Schweißkappe (5) der Schweißelektrode (4) hat.

13. Verfahren nach Anspruch 12, **dadurch gekennzeichnet, dass** das Außenprofil (9) eine Schneide zum spanabhebendem Eingriff in die Oberfläche der Schweißkappe (5) der Schweißelektrode (4) hat.

14. Verfahren nach einem der Ansprüche 6 bis 13, **dadurch gekennzeichnet, dass** ein Spalt (8) zwischen Schweißkappe (5) und Elektrode (4) vorhanden ist, dass ein Halter (6) vorgesehen ist, und dass die Schweißelektrode (4) mit aufgesetzter Schweißkappe (5) dadurch positioniert wird, dass der Spalt (8) in den Halter (6) eingebracht wird.

## Claims

1. A device for automatically detaching and removing the welding cap (5) from the welding electrode (4) of a welding tongs or welding device, **characterised by** a holder (6), in which a welding electrode (4) with a welding cap (5) placed thereon is inserted, the gap (8) between the welding cap and the electrode serving as an accommodating portion, and by a counter-directional pair of drivers (2, 3), which generates at least a clamping of the welding cap by means of a suitable profile (9), wherein, by a rotation of the drivers, a pulling force in the direction of the axis of the electrodes is generated in such a way that the welding cap is detached from the electrode and removed.

2. The device according to claim 1, **characterised in that** the pair of drivers is eccentrically mounted in such a way that the pressure on the welding cap increases during the rotation.

3. The device according to claim 1, **characterised in that** the drivers are configured with a surface profile for increasing the holding pressure on the welding cap.

4. The device according to claim 1, **characterised in that** the profile of at least one driver comprises at least one cutting edge for the machining engagement with the welding cap.

5. The device according to claim 1, **characterised in that**, for supporting or replacing the holder (6), further components are attached that hold or support the electrode outside the gap (8) in such a way that the pair of drivers (2 + 3) is able to successfully remove the welding cap.

6. A method for automatically detaching and removing a welding cap (5) of a welding electrode (4) from that welding electrode, **characterised in that** the welding electrode with the welding cap placed thereon is inserted into a pull-off device, wherein the pull-off device comprises a pair of counter-directional drivers (2, 3), each of which have an external profile (9), that, in an initial position, the two external profiles (9) have a distance from each other that is greater than the dimension of the welding cap (5) of the welding electrode, that the welding electrode is inserted between the two drivers (2, 3), that the drivers are made to rotate and made to rest against the welding cap, wherein they generate a force in the axial direction of the welding electrode and the welding cap (5) is detached from its welding electrode and removed.

7. The method according to claim 6, **characterised in that** at least one of the two drivers (3, 4), preferably both drivers (2, 3), is driven to execute a rotary movement.

8. The method according to claim 6 or 7, **characterised in that** each of the two drivers (2, 3) rotates about an axis of rotation, and that the two axes of rotation are located in an axis plane which is a radial plane to the longitudinal direction of the welding electrode (4).

9. The method according to any one of the claims 6 to 8, **characterised in that** the external profiles (9) of the two drivers (2, 3) approach each other during the course of the process starting from the initial position to the pull-off position.

10. The method according to any one of the claims 6 to 9, **characterised in that** the two drivers (2, 3) rotate by less than 360 degrees or by less than 180 degrees.

11. The method according to any one of the claims 6 to 10, **characterised in that** each of the two drivers (2, 3) rotates about an axis of rotation and that the external profile (9) rotates about an external-axis profile offset relative to the axis of rotation by an eccentric distance.

12. The method according to any one of the claims 6 to 11, **characterised in that** the external profile (9) has means for engagement with the surface of the welding cap (5) of the welding electrode (4).

13. The method according to claim 12, **characterised in that** the external profile (9) has a cutting edge for a machining engagement with the surface of the welding cap (5) of the welding electrode (4).

14. The method according to any one of the claims 6 to 13, **characterised in that** a gap (8) is provided between the welding cap (5) and the electrode (4), that a holder (6) is provided, and that the welding electrode (4) with the welding cap (5) placed thereon is positioned by the gap (8) being introduced into the holder (6).

## Revendications

1. Dispositif pour détacher et retirer automatiquement le capuchon de soudage (5) de l'électrode de soudage (4) d'une pince à souder ou d'un dispositif de soudage, **caractérisé par** un support (6) dans lequel est introduit une électrode de soudage (4) à capuchon de soudage (5) posé, la fente (8) existant entre le capuchon de soudage et l'électrode servant de logement, et par une paire d'entraîneurs (2, 3) contrarotatifs qui, grâce à un profilage (9) approprié, provoque au moins un serrage du capuchon de soudage, dans lequel, par une rotation des entraîneurs, une force de traction dans la direction axiale de l'électrode est générée de telle sorte que le capuchon de soudage se détache de l'électrode et est retiré.

2. Dispositif selon la revendication 1, **caractérisé par le fait que** ladite paire d'entraîneurs est logée excentriquement de telle manière que la pression sur le capuchon de soudage augmente durant la rotation.

3. Dispositif selon la revendication 1, **caractérisé par le fait que** les entraîneurs sont réalisés avec un profil de surface pour augmenter la pression de retenue sur le capuchon de soudage.

4. Dispositif selon la revendication 1, **caractérisé par le fait que** le profilage d'au moins un entraîneur présente un tranchant pour l'engrènement à enlèvement de copeaux avec le capuchon de soudage.

5. Dispositif selon la revendication 1, **caractérisé par le fait que** d'autres composants sont montés pour soutenir ou remplacer le support (6), qui retiennent ou appuient l'électrode à l'extérieur de la fente (8) de telle sorte que ladite paire d'entraîneurs (2, 3) peut retirer avec succès le capuchon de soudage.

6. Procédé pour détacher et retirer automatiquement un capuchon de soudage (5) d'une électrode de soudage (4) de cette électrode de soudage, **caractérisé par le fait que** l'électrode de soudage à capuchon de soudage posé est introduite dans un dispositif à retirer, le dispositif à retirer présentant une paire d'entraîneurs (2, 3) contrarotatifs qui présentent chacun un profil extérieur (9), que, dans une position initiale, les deux profils extérieurs (9) présentent une distance l'un de l'autre qui est supérieure à la dimension du capuchon de soudage (5) de l'électrode de soudage, que l'électrode de soudage est introduite entre les deux entraîneurs (2, 3), que lesdits entraîneurs sont mis en rotation et en appui sur le capuchon de soudage, exerçant ainsi une force dans la direction axiale de l'électrode de soudage et le capuchon de soudage (5) étant détaché et retiré de son électrode de soudage.

7. Procédé selon la revendication 6, **caractérisé par le fait que** l'un au moins des deux entraîneurs (2, 3), de préférence les deux entraîneurs (2, 3), est entraîné en mouvement rotatif.

8. Procédé selon la revendication 6 ou 7, **caractérisé par le fait que** chacun des deux entraîneurs (2, 3) tourne autour d'un axe de rotation et que les deux axes de rotation se situent dans un plan d'axe qui est un plan radial à la direction longitudinale de l'électrode de soudage (4).

9. Procédé selon l'une quelconque des revendications 6 à 8, **caractérisé par le fait que**, durant le déroulement du procédé, les profils extérieurs (9) des deux entraîneurs (2, 3) se rapprochent à partir de la position initiale jusqu'à la position de retrait.

10. Procédé selon l'une quelconque des revendications 6 à 9, **caractérisé par le fait que** les deux entraîneurs (2, 3) tournent de moins de 360 degrés ou de moins de 180 degrés.

11. Procédé selon l'une quelconque des revendications 6 à 10, **caractérisé par le fait que** chacun des deux entraîneurs (2, 3) tourne autour d'un axe de rotation et que le profil extérieur (9) tourne autour d'un axe de profil extérieur qui est décalé d'une mesure excentrique par rapport à l'axe de rotation.

12. Procédé selon l'une quelconque des revendications 6 à 11, **caractérisé par le fait que** le profil extérieur (9) présente des moyens d'engrènement dans la surface du capuchon de soudage (5) de l'électrode de soudage (4).

13. Procédé selon la revendication 12, **caractérisé par le fait que** le profil extérieur (9) présente un tranchant pour l'engrènement à enlèvement de copeaux dans la surface du capuchon de soudage (5) de l'électrode de soudage (4).

14. Procédé selon l'une quelconque des revendications 6 à 13, **caractérisé par le fait qu'**une fente (8) existe entre le capuchon de soudage (5) et l'électrode (4), qu'un support (6) est prévu et que l'électrode de soudage (4) à capuchon de soudage (5) posé est positionnée en introduisant ladite fente (8) dans le support (6).
